# NEUE EUROPÄISCHE PATENTSCHRIFT

(11) **EP 1 745 214 B2**
(45) Veröffentlichungstag und Bekanntmachung des Hinweises auf die Entscheidung über den Einspruch: **29.04.2020**
(45) Hinweis auf die Patenterteilung: 20.10.2010
(21) Anmeldenummer: 05753558.5
(22) Anmeldetag: 11.05.2005
(51) Int. Cl.: F03D 7/04, F03D 7/02

(54) **VERFAHREN ZUR STEUERUNG DER ROTORBLÄTTER EINER WINDENERGIEANLAGE SOWIE WINDENERGIEANLAGE MIT MESSSYSTEMEN ZUR DURCHFÜHRUNG DES VERFAHRENS**
METHOD FOR CONTROLLING THE ROTOR BLADES OF A WIND POWER STATION AND WIND POWER STATION COMPRISING A MEASURING SYSTEM FOR CARRYING OUT SAID METHOD
PROCEDE DE COMMANDE DES PALES-ROTOR D'UNE INSTALLATION EOLIENNE ET INSTALLATION EOLIENNE POURVUE D'UN SYSTEME DE MESURE ET DESTINEE A LA MISE EN OEUVRE DE CE PROCEDE

(30) Priorität: 11.05.2004 DE 102004023751
(43) Veröffentlichungstag der Anmeldung: 24.01.2007
(73) Patentinhaber: Weidmüller Monitoring Systems GmbH, 01099 Dresden (DE)
(72) Erfinder: VOLKMER, Peter, 01109 Dresden (DE)
(74) Vertreter: Kleine, Hubertus
(86) Internationale Anmeldenummer: PCT/DE2005/000882
(87) Internationale Veröffentlichungsnummer: WO 2005/111414

(56) Entgegenhaltungen:
- EP-A- 1 230 479
- EP-A1- 1 359 321
- DE-A1- 10 065 314
- DE-A1- 10 160 360
- DE-A1- 10 219 664
- DE-A1- 19 739 162
- US-A1- 2003 219 191
- US-A1- 2004 067 134

## Beschreibung

Die Erfindung betrifft ein Verfahren zur Steuerung und/oder Kontrolle der Rotorblätter einer Windkraftanlage bei dem mittels eines faseroptischen und/oder piezoelektrischen Verfahrens Dehnungszustand eines Rotorblattes der Windkraftanlage detektiert und in Abhängigkeit von dem dadurch erhaltenen Dektektionssignal entweder ein Alarmsignal ausgelöst und/oder eine Steuerung der Stellung des Rotorblattes ausgeführt wird.

Die Erfindung betrifft auch eine Windkraftanlage mit einem Mast, einer an diesem drehbar angeordneten Gondel und einem über eine Welle mit der Gondel verbundenen Rotors, der aus mindestens zwei Rotorblättern besteht, wobei an mindestens einem Rotorblatt ein erster Sensor eines ersten Messsystems angeordnet ist, das durch ein faseroptisches und/oder piezoelektrisches Messsystem gebildet wird.

Windkraftanlagen zur Umsetzung von Windenergie in elektrische Energie bestehen aus einem Mast, an dem eine Gondel schwenkbar angeordnet ist. In der Gondel ist zumindest ein Teil einer Steuerelektronik und ein Generator untergebracht. Der Generator weist eine Generatorwelle auf, mit der Rotorblätter verbunden sind. Dabei sind in der Regel drei Rotorblätter vorgesehen, es sind jedoch auch Anlagen mit mehreren oder mit zwei Rotorblättern bekannt.

Rotorblätter gehören mit zu den am höchsten belasteten Komponenten einer Windkraftanlage. Sie sollen den enormen Antriebs- und Fliehkräften, Windströmungen, Turbulenzen, Sonnenstrahlen, Regen und Schneefall sowie Eisansatz über mehrere Jahre im Dauerbetrieb standhalten. Eine lange Lebensdauer ist für den wirtschaftlichen Betrieb von Windkraftanlagen von entscheidender Bedeutung.

Hierzu wird in der DE 100 65 314 A1 ein Verfahren und eine Einrichtung zur Überwachung des Zustandes von Rotorblättern an Windkraftanlagen angegeben. Dabei werden Signalspektren der Resonanz- und Eigenfrequenzen oder der Durchlauf- und Reflexionssignale nach Sendung von Erregersignalen oder aus einer Eigenerregung beim Betrieb einer Windkraftanlage oder Betriebseigengeräusche gemessen. Aus vorherigen Vergleichsmessungen mit entweder unbeschädigten Rotorblättern oder unbrauchbaren Rotorblättern werden Sollspektren ermittelt, die entweder den Normalzustand oder einen Defektzustand charakterisieren. Die gemessenen Spektren werden sodann mit den Sollspektren direkt oder über mathematische Zwischenberechnungen verglichen. Entsprechend dieses Vergleiches wird beim Verlassen des Normalzustandes oder beim Auftreten eines dem gestörten Sollspektrum entsprechenden gemessenen Spektrum ein Störsignal ausgelöst, was in weiteren zur Auswertung in verschiedener Form verwendet werden kann.

Es besteht dabei die Möglichkeit, dass die Sensoren, d.h. die Schwingungsaufnehmer direkt in die Rotorblätter eingeklebt werden. Ein in der Nabe oder in der Gondel befindlicher Rechner übernimmt eine AD-Wandlung der Sensorsignale und überträgt diese vorzugsweise mittels Wireless LAN von der Nabe in die Gondel und von der Gondel über Wireless LAN oder via Kabel in den Turmfuß. Im dort befindlichen Auswerte- und Kommunikationsrechner werden die jeweiligen Zustände der Rotorblätter durch Vergleiche der gemessenen Ist-Spektren mit den hinterlegten SollSpektren für verschiedene bekannte Normal- und Störungszustände ermittelt. Alle Mess- und Analysedaten werden auf einem Backup-Server wahlweise im Windpark, beim Betreiber oder bei einer Drittfirma abgelegt. Die aktuellen Zustände der Rotorblätter können jederzeit beispielsweise über das Internet per Webbrowser dargestellt werden.

Mit diesem Verfahren können die Entstehung von Rissen, Schichtablösungen, Steg- und Schuppenablösungen sowie Abplatzungen an den Rotorblättern frühzeitig erkannt und behoben werden, bevor größere Schäden entstehen. Es werden auch Schäden erkennbar, die im inneren des Rotorblattes liegen und äußerlich visuell nicht erkennbar sind sowie Langzeitveränderungen, wie z. B. Versprödungen, die zu einer Veränderung des Elastizitätsmoduls führen. Damit wird die Störanfälligkeit von Windkraftanlagen erheblich reduziert, da eine vorausschauende Instandhaltung und ggf. eine Reparatur in Windschwachen Zeiten möglich ist.

Darüber hinaus kann nach Blitzeinschlägen sofort festgestellt werden, ob Beschädigungen am Rotorblatt aufgetreten sind, die ggf. einen Eingriff erfordern.

Ein Eisansatz am Rotorblatt ist sehr genau erkennbar und wird am Rotorblatt detektiert und nicht über die indirekte Messung mittels Eissensoren auf der Gondel.

Blattbruch und Sekundärschäden durch größere Havarien werden verhindert, so dass Totalschäden grundsätzlich vermeidbar sind.

Es sind aber auch andere Mess- und Kontrollverfahren bekannt, die faseroptische oder piezoelektrische Messverfahren beinhalten. So ist in der EP 0 890 081 ein Sensorsystem zum Messen von mechanischer Spannung und Temperatur insbesondere in Rotorblättern von Turbinen oder Propellern beschrieben. Hierin wird die Anordnung von optischen Fasern beschrieben, die einen ersten und einen zweiten optischen Pfad realisieren, die mit einer Lichtquelle beaufschlagt werden. Das davon ausgesandte Licht wird durch die optischen Pfade verändert bzw. treten dabei Interferenzen auf. Diese Interferenzen unterscheiden sich bei einer mechanischen Veränderung der optischen Pfade, insbesondere einer Verlängerung derselben, die in Folge von Dehnungen auftreten.

In der EP 0 640 824 ist ein Detektorsystem zur Feststellung struktureller Beschädigungen mittels optischer Fasern beschrieben. Dabei werden ebenfalls auf der Oberfläche montierte Deformations- und Beschädigungsdetektorsysteme zur Überwachung der strukturellen Integrität innerhalb der Konstruktion von Rotorblättern beschrieben.

In der EP 0 702 780 ist ebenfalls ein faseroptisches Messsystem bekannt, welches jedoch nicht die Dehnung von den Verbundsystemen, wie z. B. Rotorblättern misst, sondern deren Krümmung, jedoch nicht im gedehnten Teil des Verbundsystems.

In der DE 102 14 984 A1 ist ein Aktorik- und Sensoriksystem für Verbundstrukturen beschrieben, bei dem die Aktoren als Piezokeramikaktoren ausgeführt sind und zur Reaktionsmessung auf Erregungen durch diese Aktoren-Faser-Bragg-Gitter-Sensoren angeordnet sind. Diese Anordnung ist zur aktiven Schwingungsdämpfung von Verbundstrukturen und/oder zur Formkontrolle derselben vorgesehen.

Ein Einsatz von Aktorik- und Sensorsystemen bei Windkraftanlagen ist auch auf der Internetseite http://www.smartfibres.com beschrieben.

In der DE 197 39 162 A1 ist eine Windenergieanlage beschrieben, die einen Rotor mit Rotorblättern offenbart, die in ihrer Rotorblattstellung verstellbar sind. Zur Verstellung der Rotorblattstellung ist eine Steuervorrichtung dargestellt, die Bestandteil eines Regelkreises ist. Mit Hilfe von Momentenberechnungen, insbesondere des Rotationsmoments, des Giermoments oder des Nickmoments wird eine gezielte Verstellung der Rotorblatteinstellungen vorgenommen. Es ist bekannt, die Rotorblattverstellung auch über die Messung der Rotorblattdeformationen zu regeln, wobei die Rotorblattdeformation mittels piezoelektrischer oder faseroptischer Messung ermittelt wird.

In der EP-A-1 230 479 wird ein Verfahren zur Steuerung der Rotorblätter einer Windkraftanlage beschrieben, bei dem mittels eines faseroptischen Sensors der Spannungs- und Dehnungszustand eines Rotorblattes der Windkraftanlage detektiert und in Abhängigkeit von dem dadurch erhaltenen Detektionssignal eine Steuerung der Stellung des Rotorblattes ausgeführt wird.

In ähnlicher Weise wird in der US 2004/067134 eine Steuerung der Stellung eines Rotorblattes in Abhängigkeit von der anliegenden Last vorgenommenen, wobei hier der Spannungs- und Dehnungszustand des Rotorblattes mittels eines piezoelektrischen Sensors ermittelt wird.

Nachteilig beim Einsatz von piezoelektrischen oder faseroptischen Messsystemen ist es, dass diese beim Auftreten von Rotorblattdefekten in der eingangs geschilderten Form zumeist fehlerhafte Signale erzeugen. Bildet sich nämlich im Rotorblatt beispielsweise ein Riss, wobei dieser Riss nicht unbedingt durch einen optischen Pfad eines faseroptischen Messsystems gehen muss, so wird eine größere Dehnung des Blattes infolge der in Folge verringerter Festigkeit signalisiert, obwohl diese die Dehnung normaler Weise hervorrufende Kraft (Antriebskraft) im Eigentlichen gar nicht vorhanden ist. Wird ein solches Dehnungssignal sodann beispielsweise zur Steuerung der Rotorblattverstellung verwendet, erfolgt automatisch eine Fehlorientierung des Rotorblattes, was zur Leistungsminderung der windenergieanlage und schlimmstenfalls zum weiteren verschlechtern des schadhaften Zustandes führen kann.

Es ist daher Aufgabe der Erfindung, Rotorblattmessungen oder Rotorblattsteuerungen, die auf einem faseroptischen oder piezoelektrischen Dehnungsmessverfahren basieren, in ihrer Aussage oder in ihrer Regelfunktion sicherer zu gestalten.

Verfahrensseitig wird die Aufgabe gemäß Anspruch 1 dadurch gelöst, dass das faseroptische und/oder piezoelektrische Verfahren mit einem Resonanz-, Eigenfrequenz-, Durchlauf- und/oder Reflexionssignalspektrenvergleich arbeitendes Verfahren überwacht wird. Insbesondere wird das faseroptische und/oder piezoelektrische Verfahren mit einem Verfahren gemäß der DE 100 65 314 A1 überwacht.

Dabei wird das Resonanz-, Eigenfrequenz-, Durchlauf- und/oder Reflexionssignalspektrum des Rotorblattes gemessen und mit einem entsprechenden Soll-Spektrum verglichen. Anschließend wird in Abhängigkeit von der Größe der Abweichung des gemessenen Spektrums außerhalb eines Zulässigkeitsbereiches ein Störsignal gebildet und bei Auftreten von ausgewählten Störsignalen die Steuerung der Stellung des Rotorblattes so beeinflusst, dass eine der Veränderung angepasste Dehnung in der Steuerung als Steuerungsgröße eingesetzt wird.

Günstig ist es hierbei, dass bei Einsatz einer angepassten Dehnung als Steuerungsgröße ein Alarmsignal ausgelöst wird.

In einer weiteren Ausgestaltung des erfindungsgemäßen Verfahrens ist vorgesehen, dass bei einer Regelung der Rotorblattstellung in Abhängigkeit von dem Detektionssignal mittels der Regelung das Rotorblatt in eine Stellung angepasster bis zu geringster Belastung gestellt wird. Wird nämlich durch das piezoelektrische oder faseroptische Verfahren ein fehlerhaftes Signal bei beschädigtem Rotorblatt ermittelt, was zu einer inkorrekten Verstellung des Rotorblattes führen würde, könnte dies zu einer vollständigen Zerstörung des Rotorblattes führen.

In einer weiteren Ausgestaltung ist hierzu auch vorgesehen, dass bei einer Regelung der Rotorblattstellung in Abhängigkeit von dem Detektionssignal mittels der Regelung die Windkraftanlage gänzlich außer Betrieb genommen wird, was je nach Stärke des Schadens entschieden werden kann

Die Aufgabe wird anordnungsseitig durch eine Windkraftanlage gemäß Anspruch 5 gelöst, bei der ein zweiter Sensor eines zweiten Messsystems angeordnet ist, wobei das zweite Messsystem dem ersten Messsystem überwachend übergeordnet ist. Das zweite Messsystem ist durch ein auf Resonanz-, Eigenfrequenz-, Durchlauf- und/oder Reflexionsspektrenvergleich basierendes Messsystem gebildet.

Durch diese Anordnung wird es möglich, das erste Messsystem durch das zweite Messsystem zu überwachen und damit die Detektionssignale des ersten Messsystems zu verifizieren.

In einer günstigen Ausgestaltung der erfindungsgemäßen Windkraftanlage ist vorgesehen, dass das erste Messsystem eine erste Ausgabeeinheit und das zweite Messsystem eine zweite Ausgabeeinheit aufweist und dass die zweite Ausgabeeinheit mit der ersten Ausgabeeinheit verbunden ist.

In einer anderen Ausgestaltung der Erfindung ist vorgesehen, dass das erste Messsystem Bestandteil eines Regelkreises ist, der eine die Rotorblattstellung steuernde Steuereinheit umfasst und dass die zweite Ausgabeeinheit mit der Steuereinheit verbunden ist. Damit wird gewährleistet, dass im Falle des Auftretens eines Störsignals die Steuereinheit entsprechend angesteuert werden kann, so dass die Rotorblattstellung so erfolgen kann, dass das Rotorblatt eine geringste Belastung einnimmt oder das auch die Windkraftanlage außer Betrieb gesetzt wird.

Die Erfindung soll nachfolgend anhand eines Ausführungsbeispieles näher erläutert werden. Die zugehörige Zeichnung zeigt einen Regelkreis in der erfindungsgemäßen Ausführung.

Die Regelstrecke 1 wird durch das Rotorblatt gebildet. Auf dem Rotorblatt befinden sich erste Sensoren 2, die zu einem ersten Regler 3 gehören. Diese ersten Sensoren 2 stellen faseroptische Sensoren dar, so dass über den ersten Regler 3 Dehnungen durch eine Interferenzmessung in den faseroptischen Sensoren gemessen werden können. Der erste Regler 3 stellt sodann das Rotorblatt so, dass sich ein durch die Führungsgröße, welche durch die maximale Dehnung repräsentiert wird, eingestellte Regelabweichung ergibt, die zu Null geregelt wird. Auf dem Rotorblatt sind ebenfalls zweite Sensoren 4 angeordnet, die das Schwingungsspektrum des Rotorblattes aufnehmen und in der Auswerteeinheit 5 mit einem Soll-Spektrum vergleichen. Sobald eine unzulässige Abweichung für ausgewählte Zustände durch die Auswerteeinheit 5 festgestellt wird, wird auf den ersten Regler 3 eingewirkt, so dass dieser eine solche Einstellung des Rotorblattes bewirkt, dass es die geringste Belastung aufweist.

### Bezugszeichenliste

- 1: Regelstrecke
- 2: erster Sensor
- 3: erster Regler
- 4: zweiter Sensor
- 5: Auswerteeinheit

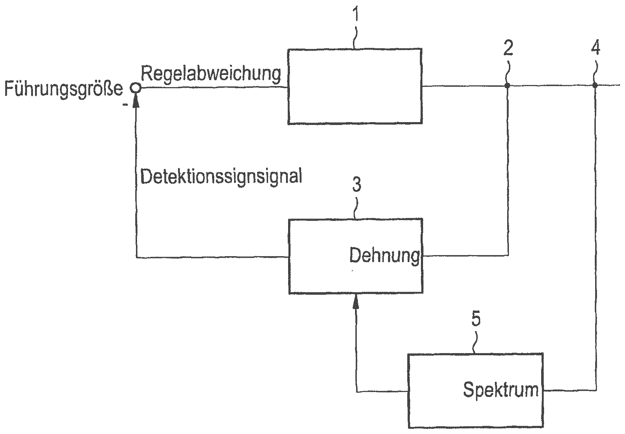

## Patentansprüche

1. Verfahren zur Steuerung und/oder Kontrolle der Rotorblätter einer Windkraftanlage bei dem mittels eines faseroptischen und/oder piezoelektrischen Verfahrens der Spannungs- oder Dehnungszustand eines Rotorblattes der Windkraftanlage detektiert und in Abhängigkeit von dem dadurch erhaltenen Detektionssignal entweder ein Alarmsignal ausgelöst und/oder eine Steuerung der Stellung des Rotorblattes ausgeführt wird, **dadurch gekennzeichnet, dass**
das faseroptische und/oder piezoelektrische Verfahren mit einem auf einem Resonanz-, Eigenfrequenz-, Durchlauf- und/oder Reflexionssignalspektrenvergleich arbeitenden Verfahren überwacht wird, wobei ein Resonanz-, Eigenfrequenz-, Durchlauf- und/oder Reflexionssignalspektrum des Rotorblattes gemessen und mit einem entsprechenden Sollspektrum verglichen wird, anschließend in Abhängigkeit von der Größe der Abweichung des gemessenen Spektrums außerhalb eines Zulässigkeitsbereiches ein Störsignal gebildet wird und bei Auftreten von ausgewählten Störsignalen die Steuerung der Stellung des Rotorblattes so beeinflusst wird, dass eine der Veränderung angepasste Dehnung in der Steuerung als Steuerungsgröße eingesetzt wird.

2. Verfahren nach Anspruch 1, **dadurch gekennzeichnet, dass** bei Einsatz einer angepassten Dehnung als Steuerungsgröße ein Alarmsignal ausgelöst wird.

3. Verfahren nach Anspruch 1, **dadurch gekennzeichnet, dass** bei einer Regelung der Rotorblattstellung in Abhängigkeit von dem Detektionssignal mittels der Regelung das Rotorblatt in eine Stellung angepasster bis zu geringster Belastung gestellt wird.

4. Verfahren nach Anspruch 1, **dadurch gekennzeichnet, dass** bei einer Regelung der Rotorblattstellung in Abhängigkeit von dem Detektionssignal mittels der Regelung die Windkraftanlage ausgeschaltet und festgestellt wird.

5. Windkraftanlage zur Durchführung des Verfahrens nach Anspruch 1, mit einem Mast, einer an diesem drehbar angeordneten Gondel und einem über eine Welle mit der Gondel verbundenen Rotors, der aus mindestens zwei Rotorblättern besteht, wobei an mindestens einem Rotorblatt ein erster Sensor eines ersten Messsystems angeordnet ist, das durch ein faseroptisches und/oder piezoelektrisches Messsystem gebildet wird, **dadurch gekennzeichnet, dass** ein zweiter Sensor eines zweiten Messsystems angeordnet ist, das durch ein auf Resonanz-, Eigenfrequenz-, Durchlauf- und/oder Reflexionssignalspektrenvergleich basierendes Messsystem gebildet wird, und dass das zweite Messsystem dem ersten Messsystem überwachend übergeordnet ist, und ein Resonanz-, Eigenfrequenz-, Durchlauf- und/oder Reflexionssignalspektrum des Rotorblattes gemessen und mit einem entsprechenden Sollspektrum verglichen wird, anschließend in Abhängigkeit von der Größe der Abweichung des gemessenen Spektrums außerhalb eines Zulässigkeitsbereiches ein Störsignal gebildet wird und bei Auftreten von ausgewählten Störsignalen die Steuerung der Stellung des Rotorblattes so beeinflusst wird, dass eine der Veränderung angepasste Dehnung in der Steuerung als Steuerungsgröße eingesetzt wird.

6. Windkraftanlage nach Anspruch 5, **dadurch gekennzeichnet, dass** das erste Messsystem eine erste Ausgabeeinheit und das zweite Messsystem eine zweite Ausgabeeinheit aufweist und dass die zweite Ausgabeeinheit mit der ersten Ausgabeeinheit verbunden ist.

7. Windkraftanlage nach Anspruch 5 oder 6, **dadurch gekennzeichnet, dass** das erste Messsystem Bestandteil eines Regelkreises ist, der eine die Rotorblattstellung steuernde Steuereinheit umfasst, und dass die zweite Ausgabeeinheit mit der Steuereinheit verbunden ist.

## Claims

1. A method for control and/or inspection of the rotor blades of a wind power station by detecting the state of stress or strain of a rotor blade of the wind power station by means of a fiber-optic and/or piezoelectric method and either triggering an alert and/or performing the control of the position of the rotor blade depending on the thus obtained detection signal, **characterized in that** the fiber-optic and/or piezoelectric method is monitored by a method based on the comparison of resonance, eigenfrequency, throughput and/or reflection signals spectra,
wherein a spectrum of the resonance, the eigenfrequency, the throughput and/or the reflection signal of the rotor blade is measured and compared to a corresponding target spectrum, subsequently an interference signal is formed depending on the magnitude of deviation of the measured spectrum outside of a permitted range, and in case of the occurrence of selected interference signals the control of the position of the rotor blade is manipulated in a way that a strain value adjusted to that modification is used as a control factor in the control unit.

2. The method according to claim 1, **characterized in that** an alert is triggered when using an adjusted strain value as a control factor.

3. The method according to claim 1, **characterized in that** in case of controlling the position of the rotor blade depending on the detection signal the rotor blade is adjusted to a position of matched up to minimized load by means of said control.

4. The method according to claim 1, **characterized in that** in case of controlling the position of the rotor blade depending on the detection signal the wind power station is switched off and locked by means of said control.

5. A wind power station for carrying out the method of claim 1, with a mast, a nacelle arranged pivotably at said mast and a rotor coupled to the nacelle by a shaft, and consisting of at least two rotor blades, wherein a first sensor of a first measurement system, constituted by a fiber-optic and/or a piezoelectric measurement system, is arranged at at least one rotor blade, **characterized in that** a second sensor of a second measurement system is provided, constituted by a measurement system based on a comparison of resonance, eigenfrequency, throughput and/or reflection signal spectra, and that the second measurement system is supervisingly superordinated to the first measurement system, and a spectrum of the resonance, the eigenfrequency, the throughput and/or the reflection signal of the rotor blade is measured and compared to a corresponding target spectrum, subsequently an interference signal is formed depending on the magnitude of deviation of the measured spectrum outside of a permitted range, and in case of the occurrence of selected interference signals the control of the position of the rotor blade is manipulated in a way that a strain value adjusted to that modification is used as a control factor in the control unit.

6. The wind power station according to claim 5, **characterized in that** the first measurement system contains a first output unit and the second measurement system contains a second output unit, and that the second output unit is linked to the first output unit.

7. The wind power station according to claim 5 or 6, **characterized in that** the first measurement system is part of a feedback loop that comprises a control unit controlling the position of the rotor blade, and that the second output unit is linked to said control unit.

## Revendications

1. Procédé pour commander et/ou inspecter les pales-rotor d'une installation éolienne où l'état de tension ou d'extension d'une pale-rotor de l'installation éolienne est détecté par une méthode par fibre optique ou piézo-électrique, et où un signal d'alerte est déclenché et/ou une commande de positionnement de la pale-rotor est effectuée en dépendance du signal de détection obtenu, **caractérisé en ce que** la méthode par fibre optique et/ou piézo-électrique est surveillée par une méthode fonctionnant à base de la comparaison des spectres des signaux de résonance, de fréquence propre, de débit et/ou de réflexion,
où le signal d'un spectre de résonance, de fréquence propre, de débit et/ou de réflexion de la pale-rotor est mesuré et comparé avec un spectre de référence, puis un signal brouilleur est formé en dépendance de l'amplitude de l'écart du spectre mesuré en dehors d'une zone agrée, et à l'apparition des signaux brouilleur sélectionnés la commande de positionnement de la pale-rotor est influencée de la sorte qu'une valeur d'extension adaptée au changement est appliquée dans la commande en tant que variable de contrôle.

2. Procédé selon la revendication 1, **caractérisé en ce que** lors de l'utilisation d'une valeur d'extension adaptée en tant que variable de contrôle un signal d'alerte est déclenché.

3. Procédé selon la revendication 1, **caractérisé en ce que** lors du réglage de la position de la pale-rotor en dépendance du signal détecté, la pale-rotor est mise dans une position de charge adaptée ou minimalisée par ce réglage.

4. Procédé selon la revendication 1, **caractérisé en ce que** lors du réglage de la position de la pale-rotor en dépendance du signal détecté, l'installation éolienne est arrêtée et bloquée par le réglage.

5. Installation éolienne pour la mise en œuvre du procédé selon la revendication 1, avec un mât, une nacelle arrangée de façon pivotante sur le mât et un rotor connecté à la nacelle par un arbre qui consiste d'au moins deux pales-rotor, où un premier capteur d'un premier système de mesures formé par un système de mesures par fibre optique et/ou piézo-électrique est disposé sur au moins une pale-rotor, **caractérisé en ce qu'**un deuxième capteur d'un deuxième système de mesures est disposé, qui est formé par un système de mesures basé sur la comparaison des signaux des spectres de résonance, de fréquence propre, de débit et/ou de réflexion, et que le deuxième système de mesures est superposé de façon surveillant au premier système de mesures, et que le signal d'un spectre de résonance, de fréquence propre, de débit et/ou de réflexion de la pale-rotor est mesuré et comparé avec un spectre de référence, puis un signal brouilleur est formé en dépendance de l'amplitude de l'écart du spectre mesuré en dehors d'une zone agrée, et à l'apparition des signaux brouilleur sélectionnés la commande de positionnement de la pale-rotor est influencée de la sorte qu'une valeur d'extension adaptée au changement est appliquée dans la commande en tant que variable de contrôle.

6. Installation éolienne selon la revendication 5, **caractérisée en ce que** le premier système de mesures comporte une première unité de sortie et que le deuxième système de mesures comporte une deuxième unité de sortie et que la deuxième unité de sortie est liée à la première unité de sortie.

7. Installation éolienne selon la revendication 5 ou 6, **caractérisée en ce que** le premier système de mesure fait partie d'un circuit de réglage, qui comprend une unité de contrôle de la position de la pale-rotor, et que la deuxième unité de sortie est liée à l'unité de contrôle.
